## Europäisches Patentamt
## European Patent Office
## Office européen des brevets

(11) Numéro de publication: **0 250 316**
**B1**

(12) **FASCICULE DE BREVET EUROPEEN**

(51) Int. Cl.⁴: **C02F 1/24,** C02F 1/78, B01F 3/04

(45) Date de publication du fascicule du brevet:
**14.06.89**

(21) Numéro de dépôt: **87401355.0**

(22) Date de dépôt: **17.06.87**

(54) Procédé de transfert de gaz et flottation pour le traitement d'eau.

(30) Priorité: **18.06.86 FR 8608780**

(43) Date de publication de la demande:
**23.12.87 Bulletin 87/52**

(45) Mention de la délivrance du brevet:
**14.06.89 Bulletin 89/24**

(84) Etats contractants désignés:
**AT BE CH DE ES GB IT LI NL**

(56) Documents cités:
**EP-A- 0 086 019**
**DE-A- 2 813 583**
**FR-A- 2 421 671**

(73) Titulaire: **OTV OMNIUM de TRAITEMENTS et de VALORISATION, Le Doublon 11 avenue Dubonnet, F-92407 Courbevoie(FR)**

(72) Inventeur: **Bourbigot, Marie-Marguerite, 1 Allée des Pépinières, F-92380 Garches(FR)**
Inventeur: **Faivre, Michel, 2, Place Anne Franck, F-78200 Achères(FR)**

(74) Mandataire: **Cuer, André, CABINET CUER 30, rue de Léningrad, F-75008 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention a trait au domaine des transferts entre phase gazeuse et phase liquide et de flottation et concerne tout particulièrement un procédé permettant de combiner un transfert de gaz et une flottation. Elle a trait également mais non exclusivement, à l'utilisation d'un tel procédé pour les traitements de potabilisation des eaux et d'épuration d'eaux usées et industrielles par un système combiné d'ozonation et flottation.

Dans les domaines techniques les plus divers, on connait de nombreux cas où se posent des problèmes de diffusion et solubilisation d'une phase gazeuse dans une phase liquide. Par exemple, lorsque le liquide est de l'eau, on peut citer, à titre non limitatif : l'injection de gaz carbonique dans une eau à reminéraliser, avec l'addition de carbonate de calcium ; l'injection d'ozone dans une eau à désinfecter ; l'envoi d'air dans des boues activées selon les procédés de traitement biologique des eaux ; l'introduction dans une eau à épurer, selon la technique de flottation, d'un gaz ayant un rôle mécanique dans la mise en oeuvre de cette technique...etc.

Dans tous ces cas de figures se pose le problème de l'obtention de certaines dimensions de bulles de gaz, aptes à fournir un coefficient de transfert acceptable, ainsi que de la vitesse de remontée des bulles dans le liquide, par exemple dans une capacité de contact (ou réacteur) constituée par une colonne à bulles.

Plusieurs techniques ont été proposées ou utilisées pour l'obtention de microbulles de gaz destinées à saturer un liquide ambiant. Par exemple, dans le cas de l'eau, l'une d'elles consiste à saturer l'eau en gaz (air, oxygène, ozone) dans une enceinte maintenue sous pression puis détente de l'eau avant l'entrée dans le réacteur de contact : on obtient ainsi de très fines bulles de gaz de diamètre moyen 40 à 100 µm. Toutefois, ce procédé exige une dépense d'énergie importante et, en outre, les microbulles ont une vitesse ascensionnelle très lente dans le liquide, ce qui peut constituer un sérieux obstacle dans certaines applications.

Conformément à d'autres procédés connus, on cherche à obtenir des séries homogènes de microbulles en faisant diffuser le gaz, légérement comprimé, à travers un élément en matériau poreux, par exemple à base de céramique ou de métal fritté, dont la porosité choisie est fonction des divers paramètres de l'application envisagée. Cependant, selon un phénomène général constaté avec de tels systèmes, les microbulles ont tendance à ne se détacher de l'élément poreux, d'où elles sont issues qu'après avoir atteint une taille de quelques millimètres, suffisante pour que la poussée d'Archimède puisse vaincre les forces de tension superficielle. Elles forment alors un panache de grosses bulles qui monte très rapidement dans la colonne de contact, à des vitesses d'au moins 20 à 25 cm/s. La dispersion obtenue est alors bien souvent insuffisante et la perte de gaz est importante.

Afin d'améliorer les rendements de transfert : phase gazeuse-phase liquide, dans le cadre de cette technique de diffusion par matériau poreux, il s'avère avantageux, pendant l'injection de gas pressurisé sous le dispositif poreux, de balayer la surface de ce dernier par un courant de liquide (voir par exemple les brevets US-A 3 545 731 et FR-A 2 421 671).

Dans les installations de traitement d'eau, le fluide gazeux est généralement constitué par de l'air oxygéné ; ou mieux de l'air ozonisé. On sait que l'ozone est un bon bactéricide et virulicide, qu'il améliore les qualités organoleptiques de l'eau et que, outre ses propriétés d'oxydation notamment pour le fer et le manganèse, il constitue un bon adjuvant de floculation. A qualité d'eau décantée égale, il permet une économie de coagulant et, à quantité égale de coagulant, il permet de mieux éliminer les matières organiques dissoutes. Toutefois, l'ozonation a une incidence perturbatrice lorsqu'elle est suivie d'une décantation classique du fait de phénomènes de flottation spontanée dans les floculateurs et les décanteurs.

Toutefois, dans la pratique courante actuelle connue, on met en oeuvre successivement, dans les installations de traitement de l'eau, les deux phases d'ozonation puis de flottation. Tel est le cas, par exemple, du procédé decrit dans le brevet EP-A 0 086 019 dont le but essentiel et de récuperer le gaz ozoné dans un dispositif d'ozonation d'eau.

L'un des buts essentiels visés par l'invention a été de chercher à combiner un transfert de gaz (notamment par ozonation) et une flottation dans un ensemble de prétraitement d'eau à épurer, après floculation et avant filtration de cette dernière, par un système susvisé faisant appel à la diffusion de gaz à travers un matériau poreux et à la ségrégation des bulles de gaz par la vitesse d'entraînement de l'eau.

Un autre but a été de réduire, par la mise en oeuvre d'un seul réacteur, les coûts d'investissement et d'exploitation et de rendre plus fiables les installations de traitement, tout en obtenant des résultats d'épuration notablement améliorés par cette combinaison judicieuse de flottation et ozonation.

Un autre but encore était de pouvoir transformer en avantage le phénomène disturbateur de flottation spontanée produit lors de l'ozonation dans les décanteurs et/ou floculateurs et d'associer avantageusement l'effet spontané du à la pré-ozonation et l'effet de la flottation elle-même, en évitant la stagnation de mousse dans les cuves de contact et dans les floculateurs. Entre autres avantages, un tel processus combiné permet d'augmenter considérablement l'élimination des algues ainsi que celle du fer et du manganèse.

Pour atteindre ces buts, l'invention propose un procédé de transfert de gaz et flottation avec ozonation à travers un disque poreux (ou équivalent) et balayage de la surface de ce dernier par un courant en liquide, selon lequel on opère dans un réacteur unique séparé en au moins deux compartiments en com-

2

muniction dont : au moins un premier compartiment, dit de transfert de gaz, muni d'au moins un diffuseur de gaz pressurisé dont la surface est balayée par un courant de liquide selon un rapport de débit liquidegaz supérieur à 0,5 et dans lequel l'eau à traiter est introduite de haut en bas ; et au moins un deuxième compartiment adjacent dit de flottation ; ladite communication étant opérée par au moins un orifice situé dans la partie inférieure de la ou des cloisons séparatrices des compartiments de façon telle que la vitesse Vs de passage du courant d'eau entre les compartiments de transfert de gaz et de flottation soit supérieure à la vitesse Va de remontée des bulles de gaz dans le compartiment de transfert.

Comme cela sera expliqué en détail plus loin dans la présente description, les compartiments précités sont créés dans le réacteur par des cloisons séparatrices dont chacune est constituée de deux parois, fixes ou mobiles, et qui peuvent avoir des positions et orientations différentes mais qui sont toujours calculées pour que, lors du passage ou espace libre ménagé entre elles, les conditions précitées de vitesses soient respectées.

L'un des objectifs visés, lors de la mise au point et par la mise en oeuvre du procédé selon l'invention, a été de réunir dans cette combinaison de floculation et flottation d'eau à épurer, les conditions optimum d'agitation et d'homogénéisation pour la formation des flocs. Ces conditions peuvent être résumées comme suit :

Les bulles de gaz, générées par le ou les diffuseurs et de diamètres moyens inférieurs à 2 mm, sont formées en nombre important et avec une taille plus homogène, ceci avec une bonne dispersion dans la masse d'eau, grâce au balayage de la surface du poreux par le courant liquide transversal (lequel peut être de l'eau brute, de l'eau floculée ou encore de l'eau traitée). Le courant d'eau à traiter, envoyé de façon ascendante au-dessus du faisceau de bulles dans le compartiment de transfert du gaz, sélectionne et transporte les plus fines bulles -par exemple de 50 à 500 µm dans le ou les compartiments de flottation par passage à travers les espaces ou orifices précités à une vitesse Vs qui, en pratique doit être supérieure à 100 m/h. L'accélération de la vitesse de l'eau, lors de ce passage, facilite les collisions entre les microflocs et améliore de ce fait leur agglomération. On notera à cet égard que la vitesse ascensionnelle Vf des bulles dans l'enceinte de flottation doit être supérieure à la vitesse V de l'eau traitée, à la sortie du réacteur, afin de ne pas entraîner de bulles de gaz et/ou du floc lesté vers ladite sortie. Cette vitesse de sortie de l'eau est avantageusement comprise entre 10 et 30 m/h.

Les plus grosses bulles de gaz issues du diffuseur -par exemple de diamètres de 500 microns à 2 mm- et dont la vitesse Va est supérieure à Vs (en pratique au-dessus de 400 m/h) remontent dans le compartiment de transfert de gaz ou diffusion et elles transfèrent sur toute la hauteur de réacteur le gaz qu'elles contiennent, par exemple de l'ozone comme on le verra dans les applications ci-après.

Un tel système de sélection des bulles de gaz, grâce aux paramètres susdéfinis, permet de séparer les bulles suffisamment fines pour se fixer sur les flocs de matière polluante des bulles de taille trop importante qui ne pourraient jouer aucun rôle dans la flottation mais seraient susceptibles de perturber la formation de matière flottante en surface du réacteur, laquelle ne doit pas remonter trop rapidement.

En pratique, selon une application avantageuse de l'invention, le gaz généré par les diffuseurs, sous une pression moyenne de 0,05 à 0,1 mégaPascal et à un débit généralement réglé à un taux inférieur à 20 m³ par heure et par m² de surface poreuse, est constitué par de l'air ou de l'oxygène ozoné, la concentration en ozone étant généralement maintenue entre 10 et 30 g par m³ d'air ozoné ou 40 à 100 g par m³ d'oxygène. Dans le procédé visé par l'invention, l'ozone se comporte comme un bon adjuvant de floculation selon des mécanismes encore mal connus mais qui font intervenir notamment : des phénomènes d'augmentation de groupes fonctionnels carboxyliques dans le milieu (qui améliorent l'absorption des matières organiques sur les oxydes d'aluminium et de fer), des phénomènes de polymérisation de composés organiques avec formation de biopolymères variés (acides nucléiques, protéines, polysaccharides) qui rendent l'action de l'ozone très efficace sur les eaux chargées en algues.

Un tel prétraitement d'ozonation-flottation, en amont d'une filtration, par filtre à sable ou autre, permet une augmentation des durées de cycle de filtration pouvant atteindre 60 % du fait, notamment, que le pouvoir colmatant du filtre est abaissé d'au moins 70 %. Une partie des matières colmatantes a été éliminée par flottation alors que l'autre partie a été détruite par l'ozone. En outre, le floc, formé dans le compartiment de flottation du réacteur, étant mieux retenu sur les filtres, la qualité de l'eau filtrée se trouve nettement améliorée. Il a par exemple été constaté, lors des expérimentations de la technique conforme à l'invention, qu'une eau non filtrée n'ayant pas subi de prétraitement d'ozonation-flottation avait des turbidités de 0,4 à 0,5 NTU alors que, par mise en oeuvre du procédé de l'invention, la turbidité descendait généralement à 0,1 NTU.

La technique susdécrite est particulièrement, quoique non exclusivement, adaptée au traitement des eaux colorées, chargées en algues mais peu turbides et ne nécissitant pas d'utilisation d'un décanteur. En général, ces eaux sont faiblement minéralisées. Conformément à un perfectionnement selon l'invention, il est possible de reminéraliser de telles eaux en profitant des bonnes conditions d'homogénéisation qui existent dans le réacteur. A cet effet, on peut saturer en CO₂ l'eau utilisée pour le balayage de la surface des matériaux poreux (ou diffuseurs), par exemple par injection d'eau de Seltz ou utiliser, pour ce balayage, de l'eau bicarbonatée par ajout de lait de chaux à l'eau chargée en CO₂. L'augmentation de la complexation avec le calcium conduit à une amélioration de l'absorption des composés organiques sur le floc.

L'invention sera maintenant mieux comprise par la description détaillée de modes et exemples de réalisation, non limitatifs, illustrès par les dessins des planches annexés et qui montrent :

- Figure 1 : un type de réacteur conforme au principe de l'invention ;
- Figure 2 : une vue en coupe du même type de réacteur ;
- Figure 3 : une variante de réalisation du réacteur de la figure 2 ;
- Figures 4 à 12 : divers modes de réalisations et positions de deux cloisons séparatrices de chaque compartiment dans le réacteur ;
- Figures 13 et 14 : divers types d'orifices définissant la communication ou ouverture entre deux cloisons ; et :
- Figures 15 à 17 : plusieurs variantes de positionnement des systèmes diffuseurs de gaz dans un réaction selon l'invention.

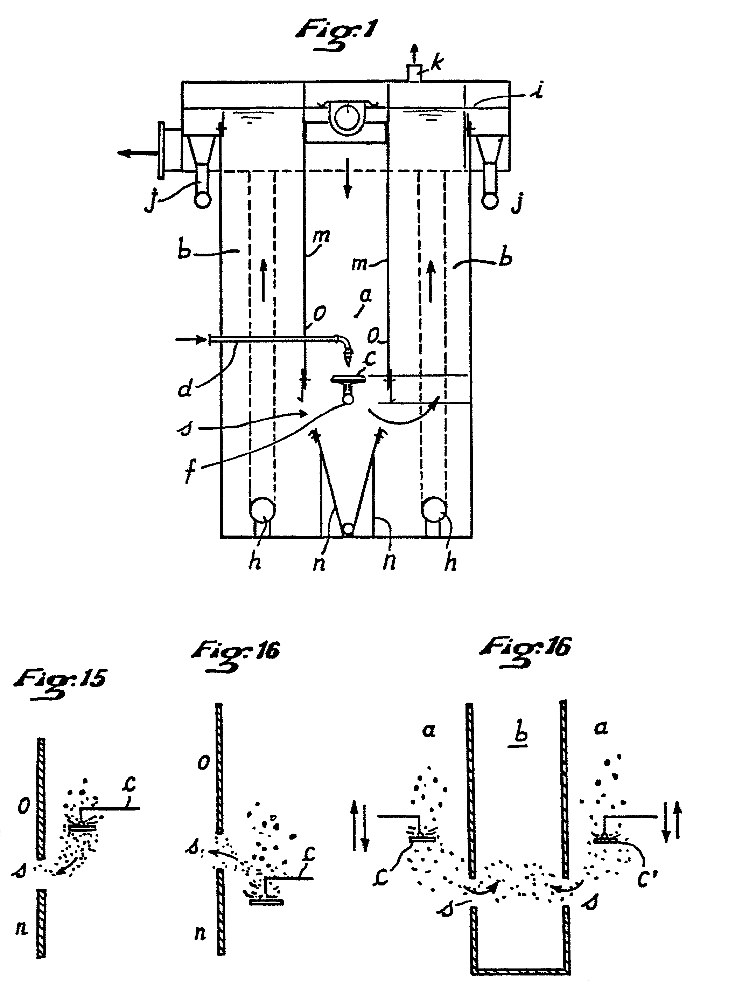

Tel que représenté sur les figures 1 à 3, le réacteur unique de transfert de gaz (ou diffusion) et flottation est divisé ici en trois compartiments dont un compartiment central a dit de diffusion et deux compartiments latéraux b dits de flottation. Le compartiment a renferme au moins une plaque poreuse ou diffuseur de gaz c qui est balayé par un courant de liquide (ici de l'eau) véhiculé par la canalisation d. L'eau à traiter arrive par la canalisation e dans le haut du réacteur selon un courant descendant et le gaz pressurisé (par exemple ici gaz ozoné) arrive par la canalisation f, les évents de gaz ozoné étant évacués par la tubulure k. L'eau à traiter passe, selon les flèches indiquées sur les figures 1 à 3, du compartiment central a vers les compartiments de flottation b en franchissant une ouverture (ou orifice) de section s qui se trouve dans la partie inférieure de chaque cloison m séparant les compartiments et constituée d'une paroi supérieure o et d'une paroi inférieure n laquelle est ici inclinée sur les figures 1 à 3 alors que la paroi supérieure o se trouve en position verticale.

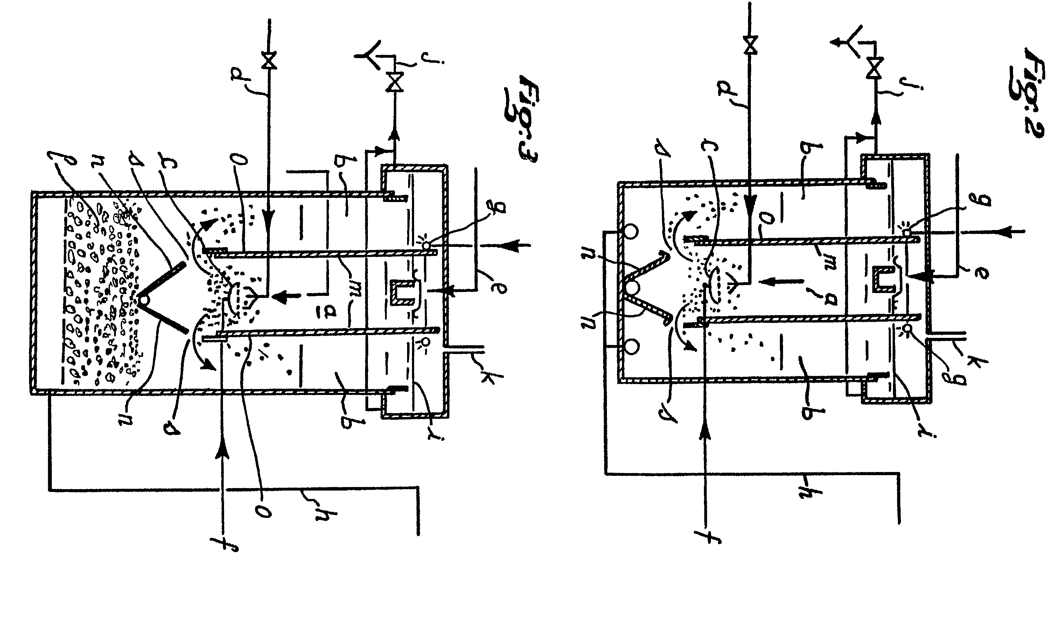

L'eau traitée sort des compartiments b de flottation par les canalisations h alors que les matières flottantes (ou flocs) sont évacuées par abaissement du plan d'eau i puis sortie par les canalisations j. Conformément à une variante illustré sur la figure 2, le plan d'eau i est arrosé par un dispositif d'aspersion g qui facilite l'évacuation des matières flottantes par les canalisations j après abaissement du plan d'eau i.

Selon la variante illustrée sur la figure 3 (en tous autres points identiques à la figure 2), un lit l de matériau filtrant peut être disposé dans la partie inférieure du réacteur.

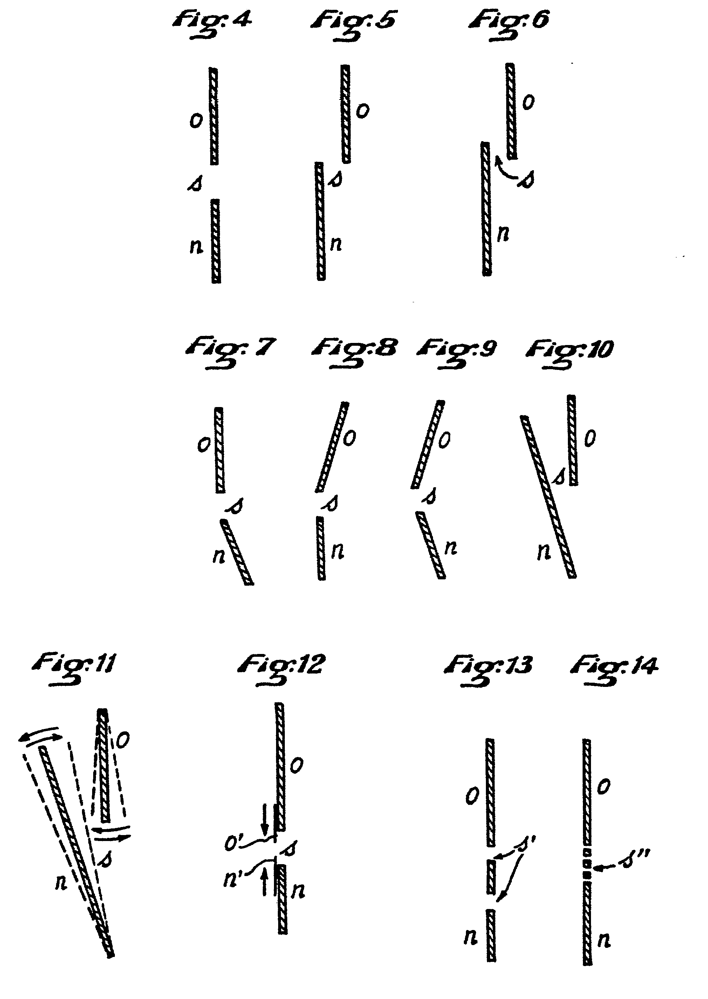

Conformément aux figures 4 à 12, on voit que les parois o et n de chaque cloison de séparation m entre les compartiments peuvent avoir des positions et orientations diverses. Par exemple, elles peuvent être disposées en alignement vertical (fig. 4) ou être décalées l'une par rapport à l'autre (fig. 5) avec possibilité pour la paroi o de dépassement, en hauteur, de l'extrémité inférieure de la paroi o (fig. 6). Selon les variantes des figures 7 à 9 les parois o et n peuvent être, l'une inclinée et l'autre verticale, ou toutes deux inclinées. Sur la figure 10 les parois sont disposées de façon à obtenir, dans la partie surmontant la section (ou passage) s, une zone de moindre turbulence facilitant la flottation dans les compartiments b.

Dans la variante illustrée sur la figure 11, la paroi n est inclinée et dépasse largement l'extrémité inférieure de la paroi supérieure o. En outre, les deux parois sont prévues mobiles, comme indiqué par les flèches et les pointillés et l'on peut ainsi ajuster la section s la plus appropriée pour le passage des fines bulles de gaz et de liquide (eau) du compartiment a aux compartiments b.

Sur la figure 12, les deux parois o et n sont équipées, dans leurs prolongements respectifs, de parties mobiles o′ et n′ qui permettent également l'ajustage adéquat de la section s de passage entre les deux parois.

Les figures 13 et 14 illustrent des cas de réalisation, non limitatifs, où la section de passage s est constituée soit de deux orifices s′ soit d'une série s″ de quatre orifices (par exemple).

Enfin, les figures 15 à 17 montrent des variantes de réalisation relatives à l'emplacement et/ou au nombre de systèmes de diffusion de gaz c. Contrairement au cas des figures 1 à 3, ce diffuseur c, installé dans le compartiment central a peut être disposé soit au-dessus (fig. 15) soit au-dessous (fig. 16) de la section appropriée s de pas sage. Conformément à l'intéressante réalisation de la figure 17, la zone de flottation selon l'invention est ici constituée par un compartiment central b alors que les compartiments de diffusions (ou transfert de gaz) a sont situés cette fois-ci de chaque côté du compartiment b. En outre, il est important de noter, comme l'indiquent les flèches correspondantes, que les systèmes de diffusion c et c′ sont ici ajustables en hauteur selon le gré de l'utilisateur.

De nombreuses études et expérimentations ont été effectuées chez la Demanderesse dans le domaine de traitement des eaux par ozonation-flottation selon les principes énoncés ci-dessus. On résumera ci-après, à titre illustratif, les résultats obtenus sur un réacteur pilote de forme rectangulaire disposée en aval d'un système de mélange rapide de réactifs coagulants classiques et en amont d'une filtration sur sable et/ou anthracite.

Le réacteur était du type figure 1 (ou fig. 2) avec les principaux paramètres suivants :
- diffuseur (c) de bulles de 150 $\mu$m à 1,8 mm de diamètre
- vitesse ascensionnelle des bulles dans le compartiment (a) : 0,01 à 0,18 m/s
- section de passage (s) de 0,0102 m² donnant une vitesse Vs de 0,048 m/s pour un débit d'eau de 5 x 10⁻⁴ m 3/s délivré par la canalisation (e).
- section de chaque compartiment (b) de flottation : 0,0748 m² donnant lieu à une vitesse V de l'eau flot-

tée de : $6,6 \times 10^{-3}$ m/s pour un débit d'eau de $5 \times 10^{-4}$ m $^3$/s, cette vitesse étant telle qu'elle ne peut entraîner les bulles de gaz et le floc lesté vers la sortie (j) du réacteur.

On notera que dans la zone de diffusion (compartiment $\underline{a}$) les bulles de gaz de diamètre supérieur à 400-500 µm et dont la vitesse Va est supérieure à Vs (de 0,048 m/s) ne sont pas entraînées par le courant d'eau à travers la section s de passage entre les compartiments $\underline{a}$ et $\underline{b}$. Ces bulles assurent, à contre-courant de l'eau à traiter descendante, le transfert de l'ozone qu'elles contiennent sur toute la hauteur du réacteur. Elles participent ainsi à un brassage hydraulique bénéfique pour le développement de la floculation qui s'amorce dans le compartiment $\underline{a}$ dit de diffusion.

Par exemple, on a traité ainsi une eau à potabiliser qui avait un NTU de 5 (NTU = "Nephelometry Turbidity Unit") et une coloration Hazen de 20 degrés. A titre comparatif, on a effectué des essais -toutes conditions étant égales par ailleurs- d'une part dans le même type de réacteur mais en diffusant seulement de l'oxygène (sans ozone) et, d'autre part, en l'absence du réacteur selon l'invention et en effectuant simplement des opérations successives de floculation et filtration selon la méthode conventionnelle.

L'eau avait été floculée au préalable par un taux de 3 g/m³ de chlorure ferrique et, après traitement, elle était filtrée dans un filtre à deux couches dont 60 cm de sable de diamètre de grains 0,60 mm et 60 cm d'anthracite de diamètre de grains 1,4 à 2,5 mm.

Dans le cas du traitement d'ozonation selon l'invention on utilisait un taux d'ozonation de 0,6 g/m³ d'eau, le gaz issu du diffuseur (type c sur les figures) étant de l'oxygène ozonisé avec 40 à 50 g d'ozone par m³ de $O_2$.

La surface du diffuseur était balayée par un débit de liquide représentant environ 10 % de la quantité d'eau brute à traiter.

Les résultats sont brièvement résumés dans tableau I qui suit :

|  | opération avec $O_3$ (oxygène ozonizé) | opération avec $O_2$ seul | opération sans $O_2$ et $O_3$ |
|---|---|---|---|
| Durée du cycle de filtration | 51 h 30 | 42 h | 37 h |
| Turbidité de l'eau filtrée | 0,14 NTU | 0,27 NTU | 0,24 NTU |
| Apparence de l'eau | brillante | non brillante | non brillante |
| Flocs observés dans le réacteur de diffusion/flottation | gros flocs homogènes (1 à 2 mm) | microflocs hétérogènes (< 0,5 mm) | microflocs hétérogènes (< 0,5 mm) |

On notera en outre que, dans le traitement selon l'invention (opération avec $O_3$) on a obtenu une stabilisation immédiate du niveau de turbidité de l'eau traitée dès le début du cycle de filtration, ceci pour des N.T.U. de 0,10 à 0,15 durant le cycle. La durée de lavage entre deux cycles de filtration a été avantageusement accrue de 20 à 35 % en moyenne et on a pu noter en outre une appréciable économie de produit floculant en amont du traitement selon l'invention.

Dans d'autres séries d'expérimentations sur des eaux plus colmatantes, notamment de "pouvoir colmatant Beaudrey" PCB de 25 à 58 on a pu faire descendre ces indices, à la sortie du réacteur, respectivement à 6 et à 15.

## Revendications

1. Dispositif pour combiner un transfert de gaz et une flottation dans un ensemble de prétraitement d'eau à épurer, après floculation et avant filtration, du type faisant appel à la diffusion de gaz à travers un matériau poreux et à la ségrégation de bulles de gaz par la vitesse d'entraînement de l'eau, caractérisé en ce qu'il comporte essentiellement un seul réacteur séparé en au moins deux compartiments en communication dont : au moins un premier compartiment, dit de transfert de gaz, muni d'au moins un diffuseur de gaz pressurisé générant des bulles de diamètre inférieur à 2 mm, dont la surface est balayée par un courant de liquide selon un rapport de débit liquide/gaz supérieur à 0,5 et dans lequel l'eau à traiter est introduite de haut en bas ; et au moins un deuxième compartiment adjacent dit de flottation ; ladite communication étant opérée par au moins un orifice situé dans la partie inférieure de la ou des cloisons séparatrices des compartiments et dont la section s et l'orientation d'ouverture sont telles que la vitesse Vs de passage du courant d'eau, entre les compartiments de transfert de gaz et de flottation, soit supérieure à la vitesse Va de remontée des bulles de gaz dans le compartiment de transfert.

2. Dispositif selon la revendication 1, caractérisé en ce que chaque cloison séparatrice des compartiments est composée de deux parois verticales en alignement entre lesquelles est ménagé ledit orifice de section s.

3. Dispositif selon la revendication 1, caractérisé en ce que chaque cloison séparatrice des compartiments est composée de deux parois verticales décalées l'une par rapport à l'autre pour laisser place audit orifice de section s.

4. Dispositif selon la revendication 1, caractérisé en ce que chaque cloison séparatrice des compartiments est composée de deux parois dont l'une au moins est en position inclinée par rapport à l'autre, avec dégagement entre elles dudit orifice de section s.

5. Dispositif selon l'une quelconque des revendications 2 à 4, caractérisé en ce que lesdites parois sont fixes ou mobiles.

6. Dispositif selon l'une quelconque des revendications 2 à 5, caractérisé en ce que deux orifices au moins sont prévus entre les deux parois.

7. Dispositif selon l'une quelconque des revendications 1 à 6, caractérisé en ce que le diffuseur de gaz est situé au dessus du niveau de l'orifice de passage entre lesdits compartiments.

8. Dispositif selon l'une quelconque des revendications 1 à 6, caractérisé en ce que le diffuseur de gaz est situé au-dessous du niveau de l'orifice de passage entre lesdits compartiments.

9. Dispositif selon l'une quelconque des revendications 1 à 8, caractérisé en ce que la vitesse Vs est maintenue supérieure à 100 m/h et en ce que la vitesse ascensionnelle Vf des bulles de gaz dans le(s) compartiment(s) de flottation est supérieure à la vitesse V de l'eau traitée à la sortie du réacteur, laquelle est comprise entre 10 et 30 m/h.

10. Procédé selon l'une quelconque des revendications 1 à 9, caractérisé en ce que le gaz est constitué par de l'air ou de l'oxygène ozoné renfermant dans ce dernier cas 40 à 100 g de $O_3$ par $m^3$ de $O_2$.

11. Procédé selon l'une quelconque des revendications 1 à 10, caractérisé en ce que l'eau utilisée pour le balayage de la surface du diffuseur de gaz est constitué par de l'eau bicarbonatée ou de l'eau saturée en $CO_2$.

## Patentansprüche

1. Verfahren zum Kombinieren einer Gasübertragung und einer Flotation in einer Einheit zur Vorbehandlung von zu reinigendem Wasser nach der Ausflockung und vor der Filterung, wobei eine Verteilung des Gases durch ein poröses Material und eine Gasblasenabsonderung durch die Antriebsgeschwindigkeit des Wassers erfolgt, dadurch gekennzeichnet, daß das Verfahren in einem einzigen Reaktor eingesetzt wird, welcher in zumindest drei in Verbindung stehende Kammern unterteilt ist, von denen zumindest eine erste, zur Gasübertragung vorgesehene Kammer zumindest einen Druckgasverteiler aufweist und Blasen mit einem Durchmesser von weniger als 2 mm erzeugt, deren Oberfläche von einem Flüssigkeitsstrom gemäß einem Flüssigkeits-/Gas-Durchflußverhältnis von mehr als 0,5 gespült wird, wobei das zu bearbeitende Wasser von oben nach unten eingeführt wird, und daß eine an die erste Kammer angrenzende zweite Kammer zur Flotation vorgesehen ist, wobei die Kommunikation über zumindest eine im unteren Teil der die Kammern trennenden Zwischenwand bzw. Zwischenwände vorgesehene Öffnung erfolgt, so daß die Durchflußgeschwindigkeit Vs des Wasserstromes zwischen den Kammern zur Gasübertragung und zur Flotation größer als die Geschwindigkeit des Aufsteigens der Gasblasen in die Übertragungskammer ist.

2. Verfahren nach Anspruch 1, dadurch gekennzeichnet, daß jede die Kammern trennende Zwischenwand aus zwei gefluchteten vertikalen Wänden besteht, zwischen denen die Öffnung vom Querschnitt s eingerichtet ist.

3. Verfahren nach Anspruch 1, dadurch gekennzeichnet, daß jede die Kammern trennende Zwischenwand aus zwei vertikalen Wänden besteht, welche zueinander versetzt angeordnet sind, um Platz für die Öffnung vom Querschnitt s freizulassen.

4. Verfahren nach Anspruch 1, dadurch gekennzeichnet, daß jede die Kammern trennende Zwischenwand aus zwei Wänden besteht, von denen zumindest eine Wand in bezug auf die andere Wand geneigt ist, wobei zwischen diesen Wänden die Öffnung vom Querschnitt s eingerichtet ist.

5. Verfahren nach einem der Ansprüche 2 bis 4, dadurch gekennzeichnet, daß zwischen zwei Wänden zumindest zwei Öffnungen vorgesehen sind.

6. Verfahren nach einem der Ansprüche 1 bis 5, dadurch gekennzeichnet, daß der Gasverteiler über dem Niveau der Durchflußöffnung zwischen den Kammern angeordnet ist.

7. Verfahren nach einem der Ansprüche 1 bis 5, dadurch gekennzeichnet, daß der Gasverteiler unter dem Niveau der Durchflußöffnung zwischen den Kammern angeordnet ist.

8. Verfahren nach einem der Ansprüche 1 bis 7, dadurch gekennzeichnet, daß die Geschwindigkeit Vs über 100 m/h gehalten wird und daß die Aufstiegsgeschwindigkeit Vf der Gasblasen in der (den) Kammer(n) größer ist als die Geschwindigkeit V des behandelten Wassers am Ausgang des Reaktors ist, welche zwischen 10 und 30 m/h liegt.

9. Verfahren nach einem der Ansprüche 1 bis 8, dadurch gekennzeichnet, daß das Gas aus Luft oder aus Ozonsauerstoff, welcher 40 bis 100 g $O_3$ pro $m^3$ $O_2$ enthält, besteht.

10. Verfahren nach einem der Ansprüche 1 bis 9, dadurch gekennzeichnet, daß die für das Spülen der Oberfläche des Gasverteilers verwendete Flüssigkeit aus Hydrogenkarbonat-Wasser oder mit $CO_2$ gesättigtem Wasser besteht.

11. Verfahren nach einem der Ansprüche 1 bis 9, dadurch gekennzeichnet, daß im unteren Teil des Reaktors ein Bett aus Filtermaterial eingerichtet ist.

**Claims**

1. Process for combining a gaz transfer and a flotation in one unit for pretreatment of water to be purified, after floculation and before filtration, of the type using the diffusion of gas through a porous material and the segregation of gas bubbles by entraining speed of the water to be purified, characterized by the fact that the process is performed in a single reactor which is separated into at least two communicating compartments comprising: at least a first compartment, said of gas transfer, containing at least one pressurized gas diffuser generating bubbles with a diameter less than 2 mm, the surface of said gas diffuser being flushed by a liquid current in a liquid/gaz flow ratio greater than 0.5 and into water to be treated is introduced down-wardly; and at least a second adjacent compartment said of flotation; the said communication being made at least one orifice located in the lower part of the partition(s) between said compartments so that the speed Vs of the passage of the current of water between the gas transfer and the flotation compartments is greater than the rising speed Va of the gas bubble in the transfer compartment.

2. Process according the claim 1, wherein each partition comprises two vertical walls in alignment wherely said orifice is located between said walls.

3. Process according the claim 1, wherein each partition comprises two vertical walls offset in relation to one another to leave space for said orifice of section s.

4. Process according the claim 1, wherein each partition comprises two walls, at least one of which is in an inclined position relative to the other, the clearance between said walls forming the said orifice of section s.

5. Process according anyone of the claims 2 to 4 wherein at least two orifices are provided between the two walls.

6. Process according anyone of the claim 1 to 5, wherein the gas diffusion is located above the level of the orifice between said compartments.

7. Process according anyone of the claims 1 to 5, wherein the gas diffuser is located below the level of the orifice between said compartments.

8. Process according anyone of the claims 1 to 7, wherein the speed Vs is maintained at more 100 m/hr and the speed Vf of the gas bubbles in the flotation compartment is greater than the speed V of the treated water at the outlet of the reactor, the speed V being from 10 to 30 m/hr.

9. Process according anyone of the claims 1 to 8, wherein the gas is selected from the group consisting of air and ozonized oxygen containing from 40 to 100 grams of ozone per cubic meter of oxygen.

10. Process according anyone of the claims 1 to 9, wherein the liquid used for flushing the surface of the gas diffusion is selected from the group consisting of bicarbonated water and water saturated with carbon dioxide.

11. Process according anyone of the claims 1 to 10, wherein a bed of filtering material is installed in the lower part of the reactor.

Fig.1

Fig.15

Fig.16

Fig.16

*Fig. 2*

*Fig. 3*

EP 0 250 316 B1

Fig. 4   Fig. 5   Fig. 6

Fig. 7   Fig. 8   Fig. 9   Fig. 10

Fig. 11   Fig. 12   Fig. 13   Fig. 14